# EUROPÄISCHE PATENTSCHRIFT

(11) **EP 1 250 534 B1**
(45) Veröffentlichungstag und Bekanntmachung des Hinweises auf die Patenterteilung: **03.12.2003**
(21) Anmeldenummer: 00954365.3
(22) Anmeldetag: 25.07.2000
(51) Int. Cl.: F15B 15/28

(54) **ANTRIEB EINES STELLVENTILS MIT SENSIEREINHEIT ZUR VENTILPOSITIONSERFASSUNG**
CONTROL-VALVE DRIVE WITH SENSOR UNIT FOR DETECTING THE POSITION OF THE VALVE
ORGANE D'ENTRAINEMENT D'UNE SOUPAPE DE REGULATION COMPORTANT UNE UNITE POUR DETECTER LA POSITION DE LA SOUPAPE

(30) Priorität: 20.08.1999 DE 19939497
(43) Veröffentlichungstag der Anmeldung: 23.10.2002
(73) Patentinhaber: SAMSON AKTIENGESELLSCHAFT, 60314 Frankfurt (DE)
(72) Erfinder: KEMMLER, Lothar, D-64546 Mörfelden-Walldrof (DE); KOLBENSCHLAG, Stefan, D-64291 Darmstadt (DE); SCHNEIDER, Walter, D-35584 Wetzlar (DE)
(74) Vertreter: Weber-Bruls, Dorothée, Dr.
(86) Internationale Anmeldenummer: DE0002446
(87) Internationale Veröffentlichungsnummer: WO01014750

(56) Entgegenhaltungen:
- EP-A- 0 478 394
- EP-A- 0 618 373
- EP-A- 0 870 932
- EP-A- 0 916 853
- WO-A-94/07037
- WO-A-95/01510
- CH-A- 682 349
- DE-A- 3 324 584
- DE-A- 3 637 068
- DE-A- 19 621 087
- DE-A- 19 648 335
- DE-A- 19 701 069
- DE-A- 19 701 137
- DE-A- 19 801 092
- US-A- 4 471 304
- US-A- 5 359 288
- US-A- 5 670 876

## Beschreibung

Die Erfindung betrifft einen Antrieb eines Stellventils nach dem Oberbegriff von Anspruch 1.

Derartige Antriebe werden beispielsweise pneumatisch, hydraulisch oder elektrisch betrieben. Die Antriebskrafteinheit formt elektrische, thermische oder mechanische Energie in eine Bewegung der Antriebsspindel um, um einen Schub oder eine Drehung zu erzeugen. Die Sensiereinheit zur Messung der Ventilposition ist üblicherweise mechanisch an die Antriebsspindel gekoppelt. Mit Hilfe dieser Sensiereinheit kann die wirkliche Position des Ventils überwacht und mittels eines Stellungsreglers, der häufig die Sensiereinheit beinhaltet, geregelt werden.

Unabhängig davon, ob in der Sensiereinheit selbst ein berührungsloses Meßprinzip wie z.B. ein Linearankergeber, ein optisch inkrementaler Aufnehmer oder ein berührendes System wie z.B. Leitplastik zum Einsatz kommt, wird die Bewegung der Antriebsspindel üblicherweise mittels eines mechanischen Abgriffs in eine Bewegung an einem Sensor der Sensiereinheit umgesetzt. Die Art des mechanischen Abgriffs und der Anbau des Stellungsreglers wird für lineare Bewegungen an Antrieben in der Norm DIN IEC 534 Teil 6 beschrieben. Danach ist für die Rückführung am Antrieb ein Verbindungsstück an der Antriebsspindel vorgesehen, welches vier - bei Drehbarkeit des Verbindungsstücks reichen zwei Löcher pro Seite - M 6-Gewindelöcher mit einer tragenden Fläche von wenigstens 10 mm Durchmesser für jedes Gewindeloch aufweist. Montagematerial zur Kopplung eines Stellungsreglers an den Sensor wird von dem Hersteller des Stellungsreglers mitgeliefert. Es umfaßt üblicherweise einen Hebel, der drehbar an den Sensor gekoppelt wird, und einen Mitnehmer, der mit der Antriebsspindel starr verbunden ist und in den drehbaren Hebel eingreift. Der Anbau des Sensors mit dem Montagematerial erfordert sorgfältigen Zusammenbau und Justage, um Hysterese zu vermeiden und den Arbeitsbereich korrekt zu wählen.

Andererseits ist aus der EP 0 870 932 A1 ein pneumatischer oder hydraulischer Zylinder mit einem Zylinderrohr bekannt, bei dem mindestens ein Dauermagnet an einem Kolben angeordnet ist, der durch sein Magnetfeld mindestens einen Signalgeber auf der Außenseite des Zylinderrohrs betätigt. Dabei ist der Signalgeber derart befestigt, daß er als Grenzsignalgeber dient. Die bekannte Befestigung ermöglicht ein komfortables Verschieben und Justieren des Signalgebers, um die Schaltpunkte genau einstellen. Die Form, Art und Anordnung des Dauermagneten wird jedoch nicht beschrieben.

Die US 5,670,876 offenbart einen magnetischen Positionssensor, der zwei magnetische Sensoren umfaßt, wobei der eine Sensor einen nicht veränderlichen Fluß erfaßt, während der andere Sensor die Veränderung des magnetischen Widerstands ("Reluktanz") über den Meßbereich mißt. Der veränderliche magnetische Widerstand entsteht dadurch, daß das Teil, dessen Bewegung erfaßt werden soll, eine spezielle Form besitzt oder mit einem Gegenstand solch einer speziellen Form verbunden ist, so daß der magnetische Fluß durch eine kontinuierliche Veränderung beispielsweise der Luftspaltlänge oder der Luftspaltbreite geschieht. Der magnetische Rückschluß besitzt dafür eine charakteristische Form.

Ein weiterer magnetischer Positionssensor ist in der US 5,359,288 zur Bestimmung der Lage von Stoßdämpfem beschrieben. Dabei mißt ein Hallsensor die Stärke eines magnetischen Feldes als Maß der Position, indem der magnetische Bereich, der sich relativ zum Hallsensor bewegt, aus Teilbereichen mit verschiedener Magnetisierung besteht, so daß sich die resultierende Feldstärke am Hallsensor entsprechend der Lage kontinuierlich verändert.

Ebenfalls bekannt sind Magnetfeldsensoren, insbesondere magnetoresistive Sensoren, die stark miniaturisiert sein können. So ist in der DE 197 01 137 A1 ein Längenseasorchip offenbart, dessen Ebene einer Maßstabsebene gegenübersteht. Dabei sind magnetoresistive Schichtstreifen mit Barber-Pole-Strukturen in spezieller Art und Weise auf dem Sensorchip angeordnet, um für eine hochauflösende Längenmessung mit hoher Empfindlichkeit bei hohem Widerstand geeignet zu sein.

Aus der EP 0 618 373 A1 ist ein gattungsgemäßer Antrieb mit einer Vorrichtung zur Bestimmung der Position einer magnetsierbaren Kolbenstange in einem Zylinder relativ zu einem gewählten Referenzpunkt bekannt. Diese Vorrichtung umfaßt einen Magneten zur Erzeugung eines magnetischen Feldes sowie eine periodische Anordnung von Nuten auf der Kolbenstange, die eine Modulation des durch den Magneten generierten Feldes bewirken. Diese periodische Modulation wird über zwei in einer Brückenschaltung integrierte Magnetwiderstände abgetastet und elektronisch derart verarbeitet, daß neben der digitalen eine analoge Positionsanzeige zugänglich ist, sowie eine Hubgeschwindigkeit ausgelesen werden kann.

Ferner ist aus der CH 682 349 A5 ein magnetischer Meßfühler zur Erfassung der Position, Geschwindigkeit und Bewegungsrichtung eines Kolbens oder Zylinders bekannt, der eine Flußdichteänderung eines magnetischen Feldes durch eine periodisch profilierte, aufmagnetisierbare Kolben- oder Zylinderstange detektiert. Die magnetische Flußdichte wird hierbei über einen Permanentmagneten erzeugt.

Nachteilig bei den obigen Vorrichtungen ist, daß die Antriebskrafteinheiten für Aktuatoren keine Einrichtungen umfassen, die bei Stromausfall Maßnahmen ergreifen, um den weiteren definierten und fehlerfreien Betrieb des Aktuators zu ermöglichen, bzw. den Aktuator, z. B. in Form einer Kolben- oder Zylinderstange, in eine definierte Position zu fahren, wodurch diese Vorrichtungen für die Regelung für Stellventile mit hohen Sicherheitsanforderungen ungeeignet sind.

Aus der DE 196 21 087 A1 ist eine analoge Sicherheitsschaltung für Aktuatoren basierend auf RC- bzw. RL-Gliedem bekannt, die sich im wesentlichen durch zwei charakteristische Zeiten auszeichnet. Hierbei handelt es sich um eine erste, kurze sogenannte Haltezeit, in der der Aktuator bei Stromausfall in eine undefinierte Ruhestellung gefahren wird, und eine zweite, längere Haltezeit, in der der Aktuator in eine sichere Zwischenstellung getrieben wird, wo er genügend lange verweilen soll, bis eine Bedienungsperson oder Automatik weitere Maßnahmen zum Schutz einer mit Aktuatoren betriebenen Anlage treffen kann, insbesondere Maßnahmen zum weiteren Herabfahren der Anlage ausgeführt werden.

Auch diese Vorrichtung ermöglicht keinen definierten Weiterbetrieb eines Aktuators in Form eines Antriebs in Verbindung mit einem Stellventil bei Unterbrechung der Netzstromversorgung. Ferner kann sie nur für elektrisch betriebene Aktuatoren eingesetzt werden.

Aufgabe der vorliegenden Erfindung ist es daher, den gattungsgemäßen Antrieb derart weiterzuentwickeln, daß die Nachteile des Stands der Technik überwunden werden, insbesondere auch ein nicht elektrisch betriebener Antrieb welcher ein inkrementales Wegaufnehmersystem nutzt, für ein Stellventil geliefert wird, der den definierten und sicheren Weiterbetrieb des Stellventils auch nach Ausfall einer Hilfsenergie, beispielsweise in Form einer Netzstromversorgung, ermöglicht.

Diese Aufgabe wird erfindungsgemäß mit dem Kennzeichen von Anspruch 1 gelöst.

Die Ansprüche 2 bis 25 beschreiben bevorzugte Ausführungsformen des erfindungsgemäßen Antriebs.

Der Erfindung liegt somit die überraschende Erkenntnis zugrunde, daß durch die Bereitstellung eines Energiespeichers in Verbindung mit dem Antrieb eines Stellventils für eine charakteristische Zeit ein Weiterbetrieb dieses Stellventils bei Stromausfall, nämlich bei Ausfall der elektrischen Hilfsenergie, durch Überbrückung ermöglicht wird, wobei erst bei gegebenem langandauemdem Ausfall das Stellventil in eine sichere definierte Position gefahren wird. Somit kann nach einem kurzzeitigem Ausfall die Vorrichtung ohne Unterbrechung weiterbetrieben werden und muß nicht neu angefahren werden, d.h. die ursprüngliche Position neu eingeregelt werden, wie z. B. durch Aufnahme von Initialisierungsdaten, was sich wiederum bei Präzisionsverfahren unter Verwendung von Stellventilen als aufwendig und durch den hierdurch bedingten Zeitverlust als kostenintensiv erweist. Somit werden durch die Erfindung sämtliche Sicherheitsbedenken bei der Verwendung von inkrementalen Wegaufnehmem in Kombination mit Stellventilen beseitigt.

Weitere Merkmale und Vorteile der Erfindung ergeben sich aus der nachfolgenden Beschreibung, in der Ausführungsbeispiele der Erfindung anhand von schematischen Zeichnungen im einzelnen erläutert sind. Dabei zeigt:
- Figur 1: eine Schnittansicht einer ersten Ausführungsform eines Antriebs nach der Erfindung;
- Figur 2: eine Detailschnittansicht einer Antriebsspindel gemäß einer zweiten Ausführungsform der Erfindung;
- Figur 3: eine Detailschnittansicht einer Antriebsspindel gemäß einer dritten Ausführungsform der Erfindung;
- Figur 4: eine Detailschnittansicht einer Antriebsspindel gemäß einer vierten Ausführungsform dei Erfindung; und
- Figur 5: eine Schnittansicht einer fünften Ausführungsform eines erfindungsgemäßen Antriebs.

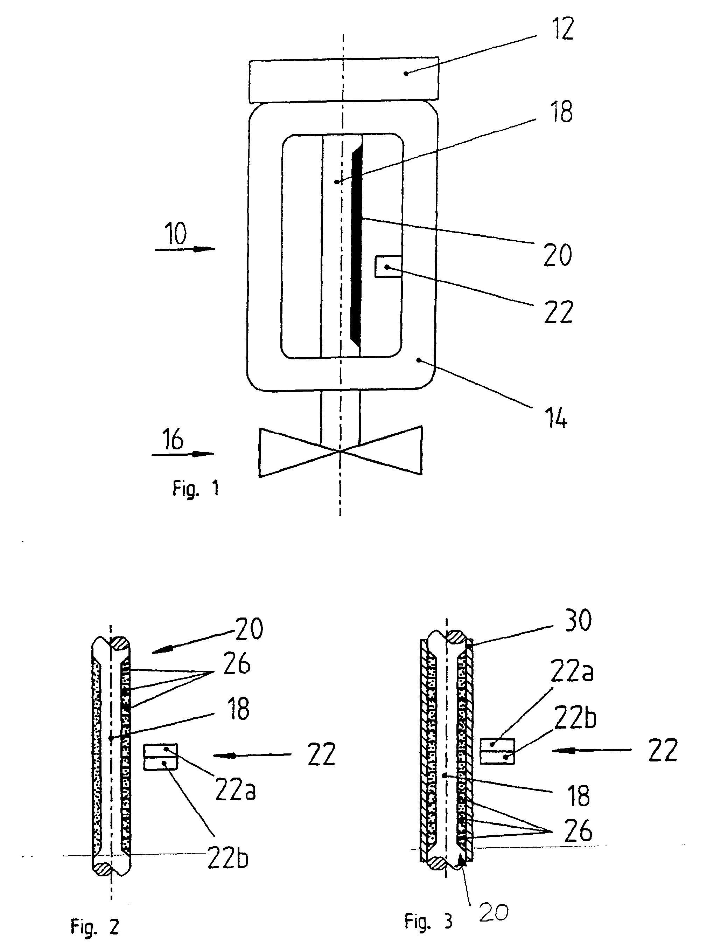

Figur 1 zeigt eine bevorzugte Ausführungsform eines Antriebs 10 nach der Erfindung. Danach wirkt eine Antriebskrafteinheit 12, die eine lineare Schubbewegung erzeugt, über eine Antriebsspindel 18 auf ein Ventil 16, und ein Joch 14 dient zur festen Verbindung der Antriebskrafteinheit 12 mit dem Ventil 16.

In der Antriebsspindel 18 ist integriert eine magnetische Spur 20 mit einer periodischen Struktur enthalten, während das Joch 14 des Antriebs 10 nahe-der magnetischen Spur 20 einen Sensor 22 aufweist, der zur Erfassung wechselnder Magnetfeldlinien geeignet ist. Der Außendurchmesser der Antriebsspindel 18 ist über die gesamte Erstreckung derselben im wesentlichen konstant. Ein nicht dargestellter Dauermagnet, dessen Magnetfeldlinien sowohl die magnetische Spur 20 als auch den Sensor 22 durchdringen, ist im Bereich der magnetischen Spur 20 und des Sensors 22 vorhanden. Der Dauermagnet kann sowohl in der Antriebsspindel 18 als auch nahe dem Sensor 22, beispielsweise auf der der magnetischen Spur 20 abgewandten Seite, angeordnet sein.

Bei der Ausführungsform gemäß Figur 2 ist die magnetische Spur 20 dem Sensor 22 zugewandt. Ferner besteht die Antriebsspindel 18 im wesentlichen aus einer nicht magnetischen, metallischen Stange, deren metallischer Anteil in einem Teilbereich verjüngt ist. In diesem Teilbereich ist die Stange mit einem Kunststoff derart umspritzt, daß der Außendurchmesser über die gesamte Erstreckung der Antriebsspindel 18 konstant ist. Für die Herstellung der magnetischen Spur 20 wird der Kunststoff, der ferritische Füllstoffe enthält, nach dem Umspritzen mittels starker magnetischer Felder magnetisiert. Dabei genügt es, die magnetische Spur 20 längs eines schmalen, dem Sensor 22 gegenüberliegenden, Streifen zu erzeugen, statt den Kunststoff auf dem ganzen Umfang zu magnetisieren, so daß die magnetische Spur 20 selbst dauermagnetisch ist und eine periodische Struktur mit in äquidistanten Abständen angeordneten Magnetpolen 26 umfaßt. Der Sensor 22 umfaßt zwei magnetoresistive Sensoren 22a, 22b, die in Bewegungsrichtung der Antriebsspindel 18 gegeneinander versetzt sind. Durch die Anordnung mindestens zweier Sensoren 22a, 22b kann auch die Bewegungsrichtung ermittelt werden. Weiterhin ermöglicht die Auswertung zweier Sensoren 22a, 22b eine Unterdrückung von Störgrößen, da Störeinflüsse wie Fremdmagnetfelder oder die Abstandsabhängigkeit zur magnetischen Spur 20 beide Sensoren 22a, 22b in gleicher Weise betreffen.

Es ist bei der Ausführungsform gemäß Figur 2 vorgesehen, daß die beiden magnetoresistiven Sensoren 22a, 22b mehrere in Form einer Wheatstone-Brückenschaltung verbundene magnetoresistive Bereiche aufweisen. Dabei sind die magnetoresistiven Bereiche in den verschiedenen Brückenzweigen der Wheatstone-Brückepschaltung in verschiedene Richtungen verdreht, wie aus der Barber-Pole-Struktur bekannt, so daß die Stromrichtung gegenüber der Bewegungsrichtung der Antriebsspindel 18 geneigt ist. Diese Art der Sensorgestaltung ermöglicht eine besonders gute Auflösung. Es wird dabei der anisotrope magnetoresistive Effekt (AMR-Effekt) ausgenutzt, gemäß dem der Widerstand einer magnetoresistiven Schicht vom Winkel zwischen der Stromdichte und der Magnetisierung abhängt. Es handelt sich bei dieser Art der Positionsbestimmung um ein inkrementales Wegmeßsystem, d.h. daß die magnetische Spur als Maßstab wirkt, der keine absolute Information zur Position enthält, so daß mittels eines Zählers bzw. eines Speichers die Ventilposition bestimmt wird. Die Genauigkeit kann noch durch Interpolation erhöht werden, so daß die Auflösung deutlich unter der Periodenlänge der magnetischen Spur liegt.

Die Figur 3 zeigt eine Antriebsspindel 18, deren magnetische Spur 20 und deren Sensor 22 der Ausführungsform nach Figur 2 entsprechen, jedoch zusätzlich eine Umhüllung aus einem dünnwandigen nicht magnetischen Rohr 30 vorgesehen ist. Dieses Rohr 30 kann aus einem nicht rostenden Stahl bestehen und wird entweder über die Stange geschoben oder als Blech um die Antriebsspindel gelegt und längs der Fügekante mit einer Naht verschweißt. Der Vorteil eines derartigen Rohres 30 als Umhüllung der magnetischen Spur 20 besteht in der glatten Oberfläche des Rohres 30. Insbesondere die Übergänge von der magnetischen Spur 20 zur Antriebsspindel 18 können mit dem Rohr überdeckt und somit sehr glatt realisiert werden. Die Glattheit ist wichtig, um die Reibung der Antriebsspindel 18 in Dichtungen und somit einen Verschleiß der Dichtungen gering zu halten.

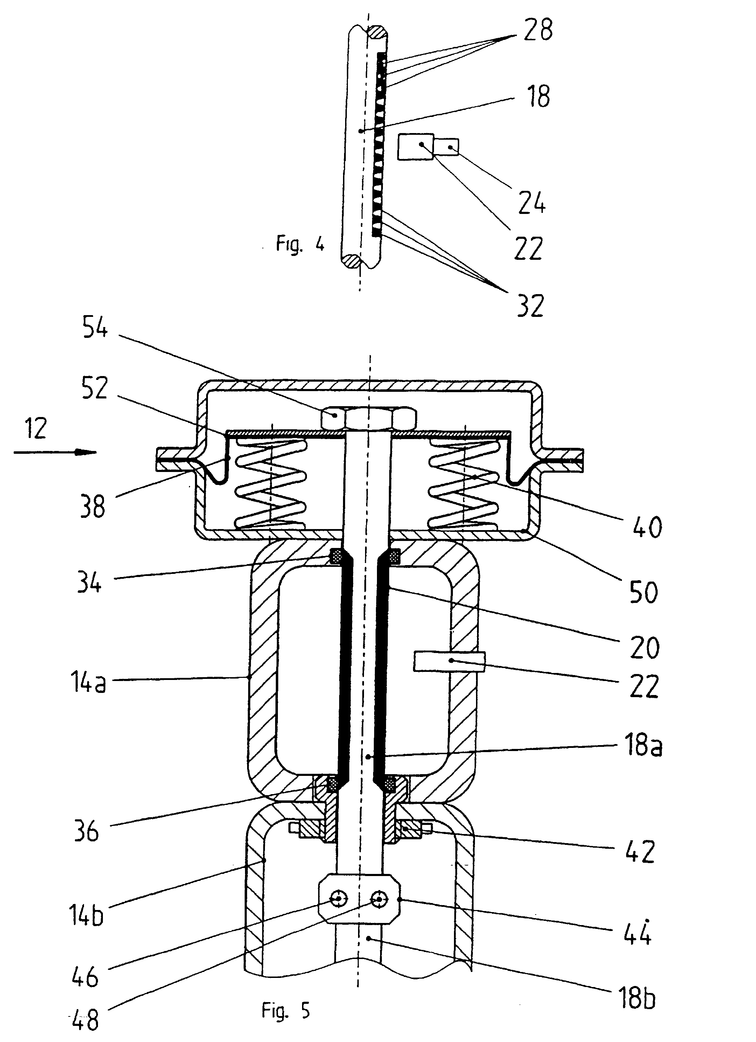

Eine weitere, in Figur 4 gezeigte Ausführungsform einer Antriebsspindel 18 mit einer magnetischen Spur 20 ist derart ausgebildet, daß die magnetische Spur 20 weichmagnetisches Material 32 umfaßt, das in äquidistanten Abständen in Bewegungsrichtung der Antriebsspindel 18 angeordnet ist. Die Zwischenräume zwischen dieser durch das Material 32 gebildeten, periodischen, weichmagnetischen Struktur sind mit nicht magnetischem Kunststoff 28 aufgefüllt, um eine glatte Oberfläche der Antriebsspindel 18 zu erreichen. Das magnetische Feld wird in dieser Variante durch einen Dauermagnet 24 erzeugt, dessen Magnetfeldlinien sowohl die magnetische Spur 20 als auch den Sensor 22 durchdringen. Der Dauermagnet 24 ist auf der der magnetischen Spur 20 abgewandten Seite mit dem Sensor 22 verbunden oder in diesen integriert.

Bei einer nicht dargestellten, alternativen Variante wird die Antriebsspindel von einer weichmagnetischen Gewindestange oder einer Zahnstange gebildet, so daß die magnetische Spur durch die Gewinde- bzw. Zahnstruktur vorgegeben ist.

Eine weitere vorteilhafte Ausführungsform der Erfindung ist in Figur 5 gezeigt. Die Antriebskrafteinheit 12 ist dabei ein pneumatischer Antrieb, der eine Membran 38 zur Beaufschlagung mit einem Druck besitzt. Die Membran 38 ist über einen Membranteller 52 und eine Schraube 54 mit einer zweigeteilten Antriebsspindel 18a,18b fest verbunden, wobei die obere Antriebsspindel 18a mit dem Membranteuer 52 verschraubt ist, während die untere Antriebsspindel 18b mit einem nicht dargestellten Ventil verbunden ist. Die obere Antriebsspindel 18a und die untere Antriebsspindel 18b sind über eine Kupplung 44 und Schrauben 46, 48 aneinander gekoppelt. Der Stelldruck wirkt oberhalb der Membran 38 zwischen einem Antriebsgehäuse 50 und der Membran 38. Der Antrieb 12 enthält Federelemente 40, welche die Membran 38 samt Membranteller 52 und die zweiteilige Antriebsspindel 18a, 18b in Figur 5 nach oben drücken. Bei Ausfall des pneumatischen Stelldrucks fährt die Antriebsspindel 18a, 18b in Figur 5 nach oben in den Antrieb 12 ein, so daß das Ventil eine definierte Sicherheitslage besitzt. Das Joch ist ebenfalls zweigeteilt in ein oberes Joch 14a und ein unteres Joch 14b, die mit einer Überwurfmutter 42 verbunden sind.

Nahe der magnetischen Spur 20 ist ein Sensor 22 angeordnet, der am oberen Joch 14a befestigt ist und bei Bewegung der Antriebsspindel 18a, 18b die Veränderung der magnetischen Feldstärke detektiert. Das obere Joch 14a kann durch Montage eines vorderen und hinteren Deckels, die in Figur 5 nicht dargestellt sind, zu einem geschlossenen Gehäuse verändert werden, das die magnetische Spur 20 und den Sensor 22 allseitig umfaßt. Dichtungen 34, 36 sind oben und unten in dem oberen Joch 14a um die obere Antriebsspindel 18a angeordnet und dichten den umschlossenen Raum sowohl gegen den Antrieb 12, als auch gegen Atmosphäre ab. Dadurch sind die magnetische Spur 20 und der Sensor 22 gegen Verschmutzung insbesondere durch magnetische Späne oder Stäube geschützt. Die magnetische Spur 20 erstreckt sich über den Bereich des oberen Jochs 14a und streift insofern die Dichtungen 34, 36 bei Bewegung der oberen Antriebsspindel 18a. Da der Außendurchmesser der oberen Antriebsspindel 18a über ihre gesamte Erstreckung konstant und mit einer glatten Oberfläche beschaffen ist, führt das Vorhandensein der magnetischen Spur 20 zu keinem erhöhten Verschleiß an den Dichtungen 34,36. Dadurch ist es möglich, das obere Joch 14a mit minimaler Erstreckung in Bewegungsrichtung der oberen Antriebsspindel 18a auszulegen. Wäre die Oberfläche in dem Übergang magnetische Spur/ Spindel nämlich nicht glatt, so müßte das obere Joch 14a so groß ausgelegt werden, daß innerhalb des Ventrihubes die Dichtungen 34, 36 nicht von der magnetischen Spur 20 berührt werden. Der Sensor 22 weist einen Mikroprozessor und eine Speichereinheit, nicht dargestellt, zur Erfassung und Auswertung der wechselnden magnetischen Feldlinien auf. Dabei ist es bevorzugt, wenn der Sensor 22 einen nicht dargestellten, integrierten Schaltkreis besitzt, so daß die Signalverarbeitung möglichst nahe am Sensor 22 erfolgt und nur geringe Abmessungen besitzt. Das Ausgangssignal des Sensors 22 repräsentiert die Ventilposition und wird einem nicht dargestellten Stellungsregler übermittelt.

Gemäß einer weiteren, nicht dargestellten Ausführungsform weist die Antriebsspindel einen hohlen Bereich z.B. in Form einer axialen Bohrung auf, in den ein kunststoffgebundener Magnet eingesetzt ist. Vorteilhafterweise kann dabei die magnetische Spur durch Magnetisierung eines ferritisch gefüllten Kunststoffs getrennt vom Antrieb und anschließendem Einsetzen als kunststoffgebundener Magnet in die Antriebsspindel erzeugt werden. Dies vermindert Übergänge auf der Oberfläche der Antriebsspindel, so daß wieder Dichtungen nicht durch die magnetische Spur gefährdet sind.

Ebenso vorteilhaft ist, wenn die Antriebsspindel eine Kerbe in ihrer Oberfläche besitzt, in die ein mit der Oberfläche abschließender kunststoffgebundener Magnet eingelassen ist.

Gemäß der Erfindung ist eine Einheit zur Überwachung der elektrischen Hilfsenergie mit dem Sensor verbunden. Ferner ist erfindungsgemäß ein Energiespeicher zur Versorgung des Sensors mit elektrischer Energie vorgesehen, der mindestens bei Ausfall der elektrischen Hilfsenergie mit dem Sensor elektrisch verbunden ist. Dieser Energiespeicher kann sowohl als Kondensator oder auch als Akkumulator bzw. Batterie realisiert sein. Der Energiespeicher ermöglicht, die Positionsmessung der Ventilposition auch bei Ausfall der elektrischen Hilfsenergie zumindest für eine Übergangszeit fortzusetzen. Dies ist vorteilhaft, da aufgrund des inkrementalen Meßprinzips der Sensor nicht allein aus dem momentanen physikalischen Signal auf die Ventilposition schließen kann. Kehrt die Hilfsenergie zurück, bevor der Energiespeicher den Sensor nicht mehr versorgt, so kann der Antrieb mit Ventil ohne Unterbrechung in Betrieb bleiben. Der Energiespeicher ermöglicht so, die Zeitspanne des Ausfalls der elektrischen Hilfsenergie entweder vollständig zu überbrücken oder das Ventil nach einer charakteristischen Zeit oder in Abhängigkeit von dem Energievorrat des Energiespeichers in eine sichere Position zu bewegen.

In einer weiteren, nicht dargetellten, Ausführungsform der Erfindung is der Sensor mit einer Logikschaltung verbunden oder diese in einen Mikroprozessor integriert. Diese Logikschaltung zwingt die Antriebsspindel bei Ausfall der elektrischen Hilfsenergie in eine Sicherheitslage, indem sie Signale für die Antriebskrafteinheit erzeugt. Die Sicherheitslage ist eine Endlage des Ventils, beispielsweise die Position "Ventil geschlossen". Zudem ist die Logikschaltung mit einem Zeitgeber verbunden und erzeugt bei Ausfall der elektrischen Hilfsenergie nach Verstreichen einer charakteristischen Zeit Signale für die Antriebskrafteinheit, welche die Antriebsspindel in eine Sicherheitslage zwingen. Ebenso kann bei einer Variante vorgesehen sein, daß die Logikschaltung bei Ausfall der elektrischen Hilfsenergie Signale für die Antriebskrafteinheit erzeugt, welche die Antriebsspindel in eine Sicherheitslage zwingen und bei wiederkehrender elektrischer Hilfsenergie anschließend Signale für die Antriebskrafteinheit erzeugt, welche die Antriebsspindel über den gesamten Arbeitsbereich bewegt und Initialisierungsdaten aufnimmt. Auch kann erfindungsgemäß vorgesehen sein, daß die Logikschaltung bei Ausfall der elektrischen Hilfsenergie pneumatische Verblockungsrelais ansteuert, die eine pneumatische Antriebskrafteinheit in ihrer Position halten.

Um einen definierten Bezugspunkt für die Ventilposition zu realisieren, ist in einer zusätzlichen, nicht gezeigten Variante der Erfindung ein von der magnetischen Spur unterschiedlichen Auslöser in der Antriebsspindel integriert, der in einer Position der Antriebsspindel ein charakteristisches Signal auslöst. Dies ist besonders dann sinnvoll, wenn die Sicherheitsendlage keinen mechanisch definierten Anschlag bietet. Dieser Auslöser kann beispielsweise der magnetischen Spur gegenüberliegend angeordnet sein. Weiterhin ist hierfür vorgesehen, daß das Joch einen weiteren Sensor zur Erfassung der Position des Auslösers aufweist. Auch kann bei Einsatz einer oben beschriebenen Logikschaltung, die bei Ausfall der elektrischen Hilfsenergie Signale für die Antriebskrafteinheit erzeugt, welche die Antriebsspindel in eine Sicherheitslage zwingen, wobei im Falle anschließend wiederkehrender elektrischer Hilfsenergie Signale für die Antriebskrafteinheit erzeugt werden, welche die Antriebsspindel über den gesamten Arbeitsbereich bewegt und Initialisierungsdaten aufnimmt, dieser Bezugspunkt sowohl durch eine mechanische Endlage realisiert oder über einen wie vorher beschriebenen zusätzlichen Auslöser mit weiterem Sensor bestimmt sein. Das Bewegen der Antriebsspindel über den gesamten Arbeitsbereich stellt sicher, daß der Wegaufnehmer auch nach Ausfall der Hilfsenergie einen korrekten Bezugspunkt aufweist. Durch Vergleich mit den ursprünglichen Initialisierungsdaten kann ferner auf möglicherweise vorhandene Fehler geschlossen und gegebenenfalls eine Fehlermeldung ausgegeben werden.

Der Antrieb nach der Erfindung ermöglicht einer besonders einfache Ankopplung des Wegaufnehmers oder des Stellungsreglers an die Antriebsspindel. Es ist keine mechanische Verbindung und somit keine Justage notwendig, da der Wegaufnehmer berührungslos arbeitet Ebenso vorteilhaft ist das inkrementale Grundprinzip, da kein mechanischer Abgleich der Endlagen notwendig ist. Die magnetische Spur kann zum Ausgleich von Toleranzen bei der Montage länger als der Arbeitsbereich gestaltet sein, ohne daß die Auflösung innerhalb des Arbeitsbereiches dadurch verringert wird. Ein Stellungsregler mit dem erfindungsgemäßen Antrieb kann weitgehend automatisiert in Betrieb genommen werden, wobei Fehler ausgeschlossen sind und gleichzeitig Zeit- und Kostenvorteile entstehen.

## Patentansprüche

1. Antrieb (10) mit einer Antriebskrafteinheit (12), einem Joch (14, 14a, 14b) zur festen Verbindung mit einem Ventil (16), einer Antriebsspindel (18, 18a, 18b) zur Übertragung der Bewegung der Antriebskrafteinheit (12) auf das Ventil (16) und einer Sensiereinheit (20, 22, 22a, 22b, 24) zur Erfassung der Ventilposition, wobei die Sensiereinheit in der Antriebsspindel (18, 18a) integriert eine magnetische Spur (20) mit einer periodischen Struktur, einen mit dem Joch (14, 14a) des Antriebs (10) nahe der magnetischen Spur (20) verbundenen Sensor (22, 22a, 22b), der zur Erfassung wechselnder Magnetfeldlinien geeignet ist, und im Bereich der magnetischen Spur (20) und des Sensors (22, 22a, 22b) mindestens einen Magnet (24), dessen Magnetfeldlinien sowohl die magnetische Spur (20) als auch den Sensor (22, 22a, 22b) durchdringen, umfaßt, **dadurch gekennzeichnet, daß**
der Antrieb (10) an ein Stellventil gekoppelt ist,
der Magnet ein Dauermagnet (24) ist,
der Sensor (22, 22a, 22b) über eine Hilfsenergie energetisch versorgbar ist,
der Sensor (22, 22a, 22b) mit einer Einheit zur Überwachung der elektrischen Hilfsenergie verbunden ist,
ein Energiespeicher zur Versorgung des Sensors (22, 22a, 22b) mit elektrischer Energie existiert, der mindestens bei Ausfall der elektrischen Hilfsenergie mit dem Sensor (22, 22a, 22b) verbunden ist,
wobei der Energiespeicher es ermöglicht, die Positionsmessung der Ventilposition auch bei Ausfall der elektrischen Hilfsenergie zumindest für eine charakteristische Zeit fortzusetzen.

2. Antrieb nach Anspruch 1, **dadurch gekennzeichnet, daß**
der Sensor (22, 22a, 22b) mit einer Logikschaltung verbunden ist oder diese in einem Mikroprozessor des Sensors (22, 22a, 22b) integriert ist, und
die Logikschaltung mit einem Zeitgeber verbunden ist und bei Ausfall der elektrischen Hilfsenergie nach Verstreichen der charakteristischen Zeit Signale für die Antriebskrafteinheit (12) erzeugt, welche die Antriebsspindel (18, 18a, 18b) in eine Sicherheitslage zwingen.

3. Antrieb nach Anspruch 1 oder 2, **dadurch gekennzeichnet, daß**
die Antriebsspindel (18, 18a) über den Teilbereich, der die magnetische Spur (20) enthält, hinaus, vorzugsweise über ihre gesamte Erstreckung, einen im wesentlichen konstanten Außendurchmesser und/oder eine im wesentlichen glatte Oberfläche aufweist.

4. Antrieb nach einem der vorangehenden Ansprüche, **dadurch gekennzeichnet, daß**
die Antriebsspindel (18) den Dauermagnet (24) enthält.

5. Antrieb nach einem der Anspruch 1 bis 3, **dadurch gekennzeichnet, daß**
der Sensor (22), insbesondere auf der der magnetischen Spur (20) abgewandten Seite, mit dem Dauermagnet (24) verbunden ist oder diesen integriert enthält.

6. Antrieb nach einem der vorangehenden Ansprüche, **dadurch gekennzeichnet, daß**
die periodische Struktur der magnetischen Spur (20) sich längs der Bewegungsrichtung der Antriebsspindel (18, 18a, 18b) erstreckt.

7. Antrieb nach einem der vorangehenden Ansprüche, **dadurch gekennzeichnet, daß**
die magnetische Spur (20) selbst dauermagnetisch ist, und die periodische Struktur im wesentlichen durch in äquidistanten Abständen angeordnete Magnetpole (26) gebildet ist.

8. Antrieb nach einem der vorangehenden Ansprüche, **dadurch gekennzeichnet, daß**
die Antriebsspindel (18) eine nicht magnetische, metallische Stange umfaßt, deren metallischer Anteil in einem Teilbereich verjüngt ist und in diesem Teilbereich die Stange mit einem Kunststoff derart umspritzt ist, daß der Außendurchmesser der Antriebsspindel (18) zumindest über die magnetische Spur (20), vorzugsweise über ihre gesamte Erstreckung, im wesentlichen konstant ist.

9. Antrieb nach einem der Ansprüche 1 bis 7, **dadurch gekennzeichnet, daß**
die Antriebsspindel (18) einen hohlen Bereich aufweist, in den ein Kunststoff derart eingesetzt ist, daß der Außendurchmesser der Antriebsspindel (18) zumindest über die magnetische Spur (20), vorzugsweise über ihre gesamte Erstreckung, im wesentlichen konstant ist.

10. Antrieb nach Anspruch 8 oder 9, **dadurch gekennzeichnet, daß**
der Kunststoff ferritische Füllstoffe enthält, die, vorzugsweise nach dem Umspritzen, aufmagnetisierbar sind, um die magnetische Spur (20) in Form von kunststoffgebundenen Magnetpolen (26) zu bilden.

11. Antrieb nach Anspruch 8 oder 9, **dadurch gekennzeichnet, daß**
der Kunststoff (28) nicht magnetisch ist und Zwischenräume zwischen einer periodischen Struktur aus weichmagnetischem Material (32) ausfüllt, um die magnetische Spur (20) zu bilden.

12. Antrieb nach einem der Ansprüche 1 bis 7, **dadurch gekennzeichnet daß**
die Antriebsspindel einen hohlen Bereich, vorzugsweise in Form einer axialen Bohrung, aufweist, in den ein kunststoffgebundener Magnet zum Bilden der magnetischen Spur eingesetzt ist.

13. Antrieb nach einem der Ansprüche 1 bis 7, **dadurch gekennzeichnet, daß**
die Antriebsspindel eine Kerbe in ihrer Oberfläche besitzt, in die ein mit der Oberfläche abschließender kunststoffgebundener Magnet zum Bilden der magnetischen Spur eingelassen ist.

14. Antrieb nach einem der Ansprüche 1 bis 7, **dadurch gekennzeichnet, daß**
die Antriebsspindel aus einer weichmagnetischen Gewindestange oder Zahnstange ausgebildet ist, so daß die magnetische Spur durch die Gewinde- bzw. Zahnstruktur vorgegeben ist.

15. Antrieb nach einem der vorangehenden Ansprüche, **dadurch gekennzeichnet, daß**
die Antriebsspindel (18) mindestens in dem Teilbereich, der die magnetische Spur (20) enthält, von einem dünnwandigen, nicht magnetischen Rohr (30) umgeben ist.

16. Antrieb nach einem der vorangehenden Ansprüche, **dadurch gekennzeichnet, daß**
der Sensor (22) und der Teil der Antriebsspindel (18a), der die magnetische Spur (20) trägt, im wesentlichen innerhalb eines geschlossenen Gehäuses angeordnet sind.

17. Antrieb nach einem der vorangehenden Ansprüche, **dadurch gekennzeichnet, daß**
die Antriebsspindel zweigeteilt ausgebildet ist, wobei die eine, die magnetische Spur (20) umfassende Antriebsspindel (18a) mit einer Membran (38) und die andere Antriebsspindel (18b) mit dem Ventil verbunden ist,
das Joch zweigeteilt ausgebildet ist, wobei das eine Joch (14a) im wesentlichen die eine Antriebsspindel (18a) beherbergt, den Sensor (22) trägt und mittels Deckeln ein im wesentlichen geschlossenes Gehäuse für die magnetische Spur (20) und den magnetischen Sensor (22) darbietet.

18. Antrieb nach einem der vorangehenden Ansprüche, **dadurch gekennzeichnet, daß**
der Sensor mit einer Speichereinheit, vorzugsweise zusätzlich zu dem Mikroprozessor, zur Erfassung und Auswertung der wechselnden magnetischen Feldlinien verbunden ist.

19. Antrieb nach einem der vorangehenden Ansprüche, **dadurch gekennzeichnet, daß**
die Logikschaltung bei wiederkehrender elektrischer Hilfsenergie Signale für die Antriebskrafteinheit erzeugt, welche die Antriebsspindel über den gesamten Arbeitsbereich bewegt und Initialisierungsdaten aufnimmt.

20. Antrieb nach einem der vorangehenden Ansprüche, **dadurch gekennzeichnet, daß**
die Antriebsspindel einen von der magnetischen Spur unterschiedlichen Auslöser integriert enthält, der in einer Position der Antriebsspindel ein charakteristisches Signal auslöst.

21. Antrieb nach Anspruch 20, **dadurch gekennzeichnet, daß**
das Joch einen weiteren Sensor zur Erfassung der Position des Auslösers trägt.

22. Antrieb nach einem der vorangehenden Ansprüche, **dadurch gekennzeichnet, daß**
die Sicherheitslage eine mechanische Endlage oder die durch den Auslöser charakterisierte Position ist.

23. Antrieb nach einem der vorangehenden Ansprüche, **dadurch gekennzeichnet, daß**
der Sensor mit einem integrierten Schaltkreis verbunden und/oder Teil eines Stellungsreglers ist.

24. Antrieb nach einem der vorangehenden Ansprüche, **dadurch gekennzeichnet, daß**
der Sensor (22) zumindest einen magnetoresistiven Sensor umfaßt.

25. Antrieb nach Anspruch 24, **dadurch gekennzeichnet, daß**
der Sensor (22) zwei magnetoresistive Sensoren (22a, 22b) umfaßt, die in Bewegungsrichtung der Antriebsspindel (18) gegeneinander versetzt sind und/oder mehrere in Form einer Wheatstone-Brückenschaltung verbundene magnetoresistive Bereiche aufweisen, die vorzugsweise in den verschiedenen Brückenzweigen in verschiedene Richtungen gedreht sind.

## Claims

1. A drive (10) with a drive power unit (12), a yoke (14, 14a, 14b) for rigid connection to a valve (16), a drive spindle (18, 18a, 18b) for transmitting the movement of the drive power unit (12) to the valve (16) and a sensing unit (20, 22, 22a, 22b, 24) for detecting the valve position, the sensing unit comprising integrated in the drive spindle (18, 18a) a magnetic track (20) with a periodic structure, a sensor (22, 22a, 22b) which is connected to the yoke (14, 14a) of the drive (10) near the magnetic track (20) and which is adapted to detect alternating magnetic field lines, and, in the region of the magnetic track (20) and the sensor (22, 22a, 22b), at least one magnet (24), the magnetic field lines of which penetrate both the magnetic track (20) and the sensor (22, 22a, 22b), **characterised in that** the drive (10) is coupled to a servo-valve,
the magnet is a permanent magnet (24),
the sensor (22, 22a, 22b) is adapted to be supplied with energy via an auxiliary energy,
the sensor (22, 22a, 22b) is connected to a unit for monitoring the electric auxiliary energy,
an energy store for supplying the sensor (22, 22a, 22b) with electric energy exists, which is connected to the sensor (22, 22a, 22b) at least in the event of breakdown of the electric auxiliary energy,
the energy store enabling measurement of the valve position to be continued for a characteristic time at least even in the event of breakdown of the electric auxiliary energy.

2. A drive according to claim 1, **characterised in that** the sensor (22, 22a, 22b) is connected to a logic circuit or said circuit is integrated in a microprocessor of the sensor (22, 22a, 22b) and the logic circuit is connected to a timer and, in the event of breakdown of the electric auxiliary energy, after the characteristic time has elapsed, generates signals for the drive power unit (12), which signals force the drive spindle (18, 18a, 18b) into a safety position.

3. A drive according to claim 1 or 2, **characterised in that** the drive spindle (18, 18a) has a substantially constant outside diameter and/or a substantially smooth surface over the partial zone containing the magnetic track (20), preferably over the entire extent thereof.

4. A drive according to any one of the preceding claims, **characterised in that** the drive spindle (18) contains the permanent magnet (24).

5. A drive according to any one of claims 1 to 3, **characterised in that** the sensor (22) is connected, particularly on the side remote from the magnetic track (20), to the permanent magnet (24) or contains the same integrated therein.

6. A drive according to any one of the preceding claims, **characterised in that** the periodic structure of the magnetic track (20) extends along the direction of movement of the drive spindle (18, 18a, 18b).

7. A drive according to any one of the preceding claims, **characterised in that** the magnetic track (20) itself is permanently magnetic and the periodic structure is formed substantially by equidistant-spaced magnetic poles (26).

8. A drive according to any one of the preceding claims, **characterised in that** the drive spindle (18) comprises a non-magnetic metal rod, the metal portion of which is tapered in a partial zone and in said partial zone the rod is so encapsulated in a plastic that the outside diameter of the drive spindle (18) is substantially constant at least over the magnetic track (20), preferably over the entire extent thereof.

9. A drive according to any one of claims 1 to 7, **characterised in that** the drive spindle (18) has a hollow zone in which a plastic is so inserted that the outside diameter of the drive spindle (18) is substantially constant, at least over the magnetic track (20), preferably over the entire extent thereof.

10. A drive according to claim 8 or 9, **characterised in that** the plastic contains ferritic fillers which, preferably after the encapsulation, are adapted to be magnetised in order to form the magnetic track (20) in the form of plastic-bonded magnetic poles (26).

11. A drive according to claim 8 or 9, **characterised in that** the plastic (28) is not magnetic and fills gaps between a periodic structure of soft-magnetic material (32) in order to form the magnetic track (20).

12. A drive according to any one of claims 1 to 7, **characterised in that** the drive spindle has a hollow zone, preferably in the form of an axial borehole, in which a plastic-bonded magnet is inserted to form the magnetic track.

13. A drive according to any one of claims 1 to 7, **characterised in that** the drive spindle has a notch in its surface into which there is inserted to form the magnetic track a plastic-bonded magnet flush with the said surface.

14. A drive according to any one of claims 1 to 7, **characterised in that** the drive spindle is formed from a soft-magnetic screw rod or rack so that the magnetic track is preset by the screwthread or rack tooth structure.

15. A drive according to any one of the preceding claims, **characterised in that** the drive spindle (18) is surrounded by a thin-wall non-magnetic tube (30), at least in the partial zone containing the magnetic track (20).

16. A drive according to any one of the preceding claims, **characterised in that** the sensor (22) and the part of the drive spindle (18a) carrying the magnetic track (20) are disposed substantially inside a closed casing.

17. A drive according to any one of the preceding claims, **characterised in that** the drive spindle is divided into two, one drive spindle (18a) which comprises the magnetic track (20) being connected to a membrane (38) and the other drive spindle (18b) being connected to the valve,
the yoke is divided into two parts, one yoke (14a) substantially housing the one drive spindle (18a), carrying the sensor (22), and offering, by means of covers, a substantially closed casing for the magnetic track (20) and the magnetic sensor (22).

18. A drive according to any one of the preceding claims, **characterised in that** the sensor is connected to a memory unit, preferably in addition to the microprocessor, in order to detect and evaluate the alternating magnetic field lines.

19. A drive according to any one of the preceding claims, **characterised in that** on the restoration of electric auxiliary energy the logic circuit generates signals for the drive power unit which moves the drive spindle over the entire working range and receives initialisation data.

20. A drive according to any one of the preceding claims, **characterised in that** a trigger different from the magnetic track is integrated in the drive spindle and triggers a characteristic signal in one position of the drive spindle.

21. A drive according to claim 20, **characterised in that** the yoke carries another sensor to detect the position of the trigger.

22. A drive according to any one of the preceding claims, **characterised in that** the safety position is a mechanical end position or the position **characterised by** the trigger.

23. A drive according to any one of the preceding claims, **characterised in that** the sensor is connected to an integrated circuit and/or is part of a position controller.

24. A drive according to any one of the preceding claims, **characterised in that** the sensor (22) comprises at least one magnetoresistive sensor.

25. A drive according to claim 24, **characterised in that** the sensor (22) comprises two magnetoresistive sensors (22a, 22b) which are offset from one another in the direction of movement of the drive spindle (18) and/or comprise a plurality of magnetoresistive zones connected in the form of a Wheatstone bridge circuit, said zones preferably being rotated in different directions in the different bridge branches.

## Revendications

1. Organe d'entraînement (10), avec une unité de force d'entraînement (12), une culasse (14, 14a, 14b) pour assurer la liaison rigide à une soupape (16), une broche d'entraînement (18, 18a, 18b) pour la transmission du mouvement de l'unité de force d'entraînement (12) à la soupape (16), et une unité de détection (20, 22, 22a, 22b, 24) pour détecter la position de soupape, l'unité de détection intégrant dans la broche d'entraînement (18, 18a) une piste magnétique (20) ayant une structure périodique, un capteur (22, 22a, 22b) relié à la culasse (14, 14a) de l'organe d'entraînement (10) à proximité de la piste magnétique (20), capteur convenant pour détecter des lignes de champ magnétique alternant, et, dans la zone de la piste magnétique (20) et du capteur (22, 22a, 22b), au moins un aimant (24), dont les lignes de champ magnétiques traversent tant la piste magnétique (20), qu'également le capteur (22, 22a, 22b), **caractérisé en ce que**
l'organe d'entraînement (10) est couplé à une soupape de réglage,
l'aimant est un aimant permanent (24),
le capteur (22, 22a, 22b) est susceptible d'être alimenté énergétiquement par une énergie auxiliaire,
le capteur (22, 22a, 22b) est relié à l'unité de surveillance de l'énergie auxiliaire électrique,
un accumulateur d'énergie, devant alimenter le capteur (22, 22a, 22b) en énergie électrique est prévu, relié au moins au capteur (22, 22a, 22b) en cas de défaillance de l'énergie auxiliaire électrique,
l'accumulateur d'énergie permettant de continuer la mesure de position de soupape, au moins pour une durée caractéristique, même si l'énergie auxiliaire électrique est défaillante.

2. Organe d'entraînement selon la revendication 1, **caractérisé en ce que** le capteur (22, 22a, 22b) est relié à un circuit logique ou bien celui-ci est intégré dans un microprocesseur du capteur (22, 22a, 22b), et
le circuit logique est relié à une horloge ou rythmeur et, en cas de défaillance de l'énergie auxiliaire électrique, après expiration de la durée caractéristique, il génère, pour l'unité de force d'entraînement (12), des signaux qui contraignent à faire passer la broche d'entraînement (18, 18a, 18b) en une position de sécurité.

3. Organe d'entraînement selon la revendication 1 ou 2, **caractérisé en ce que** la broche d'entraînement (18, 18a) présente, sur une zone partielle qui contient la piste magnétique (20), de préférence sur la totalité de son étendue, un diamètre extérieur sensiblement constant et/ou une surface sensiblement pratiquement lisse.

4. Organe d'entraînement selon l'une des revendications précédentes, **caractérisé en ce que** la broche d'entraînement (18) contient l'aimant permanent (24).

5. Organe d'entraînement selon l'une des revendications 1 à 3, **caractérisé en ce que** le capteur (22), en particulier sur le côté opposé à la piste magnétique (20), est relié à l'aimant permanent (24), ou bien contient celui-ci, de façon intégrée.

6. Organe d'entraînement selon l'une des revendications précédentes, **caractérisé en ce que** la structure périodique de la piste magnétique (20) s'étend dans la direction longitudinale de déplacement de la broche d'entraînement (18, 18a, 18b).

7. Organe d'entraînement selon l'une des revendications précédentes, **caractérisé en ce que** la piste magnétique (20) elle-même est à magnétisme permanent et la structure périodique est formée essentiellement par des pôles magnétiques (26) disposés à des espacements équidistants.

8. Organe d'entraînement selon l'une des revendications précédentes, **caractérisé en ce que** la broche d'entraînement (18) comprend une barre métallique, non magnétique, dont la proportion métallique est diminuée dans une zone partielle et, dans cette zone partielle la barre est enrobée par injection avec une matière synthétique, **en ce que** le diamètre extérieur de la broche d'entraînement (18) est sensiblement constant, au moins sur la piste magnétique (20), de préférence sur la totalité de son étendue.

9. Organe d'entraînement selon l'une des revendications 1 à 7, **caractérisé en ce que** la broche d'entraînement (18) présente une zone creuse, dans laquelle une matière synthétique est insérée, de manière que le diamètre extérieur de la broche d'entraînement (18) soit sensiblement constant, au moins sur la piste magnétique (20), de préférence sur la totalité de son étendue.

10. Organe d'entraînement selon la revendication 8 ou 9, **caractérisé en ce que** la matière synthétique contient des charges ferritiques qui sont magnétisables, de préférence après l'enrobage par injection, afin de former la piste magnétique (20) à la forme de pôles magnétique (26) liés par la matière synthétique.

11. Organe d'entraînement selon la revendication 8 ou 9, **caractérisé en ce que** la matière synthétique (28) n'est pas magnétique et remplit les espaces intermédiaires se trouvant entre une structure périodique formée d'un matériau (32) magnétiquement doux, afin de former la piste magnétique (20).

12. Organe d'entraînement selon l'une des revendications 1 à 7, **caractérisé en ce que** la broche d'entraînement présente une zone creuse, de préférence ayant la forme d'un perçage axial, zone dans laquelle est inséré un aimant, lié par la matière synthétique, pour former la piste magnétique.

13. Organe d'entraînement selon l'une des revendications 1 à 7, **caractérisé en ce que** la broche d'entraînement présente dans sa surface une entaille, dans laquelle un aimant, lié par la matière synthétique, délimité par la surface, est inséré pour former la piste magnétique.

14. Organe d'entraînement selon l'une des revendications 1 à 7, **caractérisé en ce que** la broche d'entraînement est formée d'une tige filetée ou d'une crémaillère, magnétiquement douce, de manière que la piste magnétique soit prédéterminée par la structure à filetage ou à denture .

15. Organe d'entraînement selon l'une des revendications précédentes, **caractérisé en ce que** la broche d'entraînement (18), au moins dans une zone partielle qui contient la piste magnétique (20), est entraînée par un tube (30) non magnétique, à paroi mince.

16. Organe d'entraînement selon l'une des revendications précédentes, **caractérisé en ce que** le capteur (22) et la partie de la broche d'entraînement (18) qui porte la piste magnétique (20) sont disposés sensiblement à l'intérieur d'un carter fermé.

17. Organe d'entraînement selon l'une des revendications précédentes, **caractérisé en ce que** la broche d'entraînement est réalisée en deux parties, la première, une broche d'entraînement (18a), entourant la piste magnétique (20) étant reliée à une membrane (38) et l'autre, une broche d'entraînement (18b), étant reliée à une soupape,
la culasse est divisée en deux parties, une première culasse (14a) hébergeant essentiellement une broche d'entraînement (18a), portant le capteur (22) et, au moyen de couvercles, formant un boîtier pratiquement fermé, prévu pour la piste magnétique (20) et le capteur magnétique (22).

18. Organe d'entraînement selon l'une des revendications précédentes, **caractérisé en ce que** le capteur est relié à une unité à mémoire, de préférence en plus du microprocesseur, afin de détecter et d'évaluer les lignes de champ magnétique variables.

19. Organe d'entraînement selon l'une des revendications précédentes, **caractérisé en ce que**, lorsque l'énergie auxiliaire électrique revient, le circuit logique produit des signaux destinés à l'unité de force d'entraînement, qui déplace la broche d'entraînement sur l'ensemble de la plage de travail et enregistre des données d'initialisation.

20. Organe d'entraînement selon l'une des revendications précédentes, **caractérisé en ce que** la broche d'entraînement contient de façon intégrée un déclencheur, qui est différent de la piste magnétique et déclenche un signal caractéristique, à une certaine position de la broche d'entraînement.

21. Organe d'entraînement selon la revendication 20, **caractérisé en ce que** la culasse porte un autre capteur devant détecter la position du déclencheur.

22. Organe d'entraînement selon l'une des revendications précédentes, **caractérisé en ce que** la position de sécurité est une position de fin de course mécanique, ou bien est la position **caractérisée par** le déclencheur.

23. Organe d'entraînement selon l'une des revendications précédentes, **caractérisé en ce que** le capteur est relié à un circuit intégré et/ou fait partie d'un régulateur de position.

24. Organe d'entraînement selon l'une des revendications précédentes, **caractérisé en ce que** le capteur (22) comprend au moins un capteur magnéto-résistif.

25. Organe d'entraînement selon la revendication 24, **caractérisé en ce que** le capteur (22) comprend deux capteurs (22a, 22b) magnéto-résistifs, qui sont décalés l'un par rapport à l'autre dans la direction de déplacement de la broche d'entraînement (18) et/ou présentent plusieurs zones magnéto-résistives reliées sous forme d'un circuit en pont de Wheatstone, qui sont tournées dans des directions différentes, de préférence dans les différéntes branches du pont.
